# EUROPEAN PATENT APPLICATION

(11) **EP 4 794 132 A1**
(43) Date of publication of application: **19.08.2026**
(21) Application number: 24878392.0
(22) Date of filing: 17.04.2024
(51) Int. Cl.: H01R 13/52

(54) **CONNECTOR, BATTERY, ELECTRICAL DEVICE, AND ENERGY STORAGE DEVICE**

(30) Priority: 18.10.2023 CN 202322796861 U
(71) Applicant: Contemporary Amperex Technology Co., Limited, Ningde, Fujian 352100 (CN)
(72) Inventor: HAN, Guan, Ningde, Fujian 352100 (CN); ZHANG, Hua, Ningde, Fujian 352100 (CN)
(74) Representative: Ziebig Hengelhaupt Intellectual Property Attorneys Patentanwaltskanzlei PartGmbB
(86) International application number: PCT/CN2024/088295
(87) International publication number: WO 2025/081738

(57) **Abstract**

Provided in the present application are a connector (400), a battery (100), an electrical device, and an energy storage device. The connector (400) comprises a plug (410) and a protective cover (420), the protective cover (420) being provided with an accommodation cavity (421), an opening portion (422) being formed at the cavity opening of the accommodation cavity (421), and the plug (410) being accommodated in the accommodation cavity (421). When the plug (410) is inserted into a plugging port (31), the opening portion (422) covers a socket (30), such that the plugging port (31) is located inside the accommodation cavity (421). With respect to the connector (400) provided in the embodiments of the present application, the protective cover (420) can cover the plug (410) to achieve the purposes of dustproofing and waterproofing, and moreover, the opening portion (422) of the protective cover (420) can cover the socket (30) and provide covering protection for the plugging port (31) of the socket (30), thereby effectively reducing the probability of water seepage at the plugging port (31), and further improving the reliability of the connector (400) and the plugging port (31).

## Description

The present application refers to Chinese Patent Application No. 202322796861.2, filed on October 18, 2023, and entitled "CONNECTOR, BATTERY, ELECTRIC DEVICE, AND ENERGY STORAGE DEVICE", which is incorporated herein by reference in its entirety.

### TECHNICAL FIELD

The present application relates to the technical field of connector structures, and in particular, to a connector, a battery, an electric device, and an energy storage device.

### BACKGROUND

Connectors not only need to achieve basic protection against electric shock, but also should meet requirements for dustproof, moisture-proof, and waterproof for the electrical connections and communication connections of key products.

In the related art, connectors commonly use a two-piece protective structure, in which two parts of the two-piece protective structure jointly enclose a tail portion of a wire harness portion of the connector for protection. However, such a two-piece protective structure is not capable of protecting the plugging portion when the connector is plugged into a socket, and the plugging portion still has a risk of water ingress.

### SUMMARY

The purpose of the embodiments of the present application is to provide a connector, a battery, an electric device, and an energy storage device, aiming to solve the problem in the related art that the protective structure only protects the connection portion of the wire harness, while the plugging portion between the plug of the connector and the socket still has a risk of water ingress.

To achieve the above purpose, the technical solution adopted by the embodiments of the present application is:

According to a first aspect, an embodiment of the present application provides a connector for being plugged into a socket port of a socket. The connector includes a plug and a protective cover, where the protective cover has an accommodating cavity and forms an opening portion at a cavity opening of the accommodating cavity, the plug is accommodated in the accommodating cavity; and when the plug is plugged into the socket port, the opening portion covers the socket so that the socket port is located in the accommodating cavity.

Beneficial effects of the embodiments of the present application: For the connector provided by the embodiments of the present application, the protective cover is sleeved on the plug, the protective cover can cover the plug to achieve dustproof and waterproof purposes. In addition, when the plug is plugged into the socket port, the opening portion of the protective cover can cover the socket so that the socket port is located in the accommodating cavity, that is, the protective cover can also cover the socket port of the socket, thereby achieving protection of the socket port, effectively reducing the probability of water ingress in the socket port, and further improving the reliability of the connection between the connector and the socket port.

In some embodiments, the opening portion is adapted to an outer surface of the socket, such that an inner wall of the opening portion is capable of closely fitting against the outer surface of the socket.

By adopting the above technical solution, when the plug is plugged into the socket port, the opening portion of the protective cover can cover the socket so that the socket port is located in the accommodating cavity and forms protection, the opening portion is adapted to the outer surface of the socket, and thus the inner wall of the opening portion can closely fit against the outer surface of the socket, thereby effectively reducing the probability of water droplets flowing into the socket port from the outer surface of the socket. In addition, the inner wall of the opening portion closely fitting against the outer surface of the socket can also reduce a contact area between the outer surface of the socket and air, so as to reduce the probability of condensation forming on the outer surface of the socket.

In some embodiments, the protective cover exhibits elasticity.

By adopting the above technical solution, the protective cover exhibits elasticity, and the protective cover can, according to its own elasticity, cover and clamp onto the outer surface of the socket, so as to improve the fitting degree between the opening portion and the outer surface of the socket, which can effectively reduce the probability of water ingress between the opening portion and the outer surface of the socket, and improve the connection reliability between the plug and the socket.

In some embodiments, the connector further includes a wire harness, the wire harness connected to the plug; the protective cover is provided with a protection structure, and the protection structure is sleeved on at least part of an outer surface of the wire harness.

By adopting the above technical solution, the protective cover is provided with a protection structure, and when the protective cover is sleeved on the plug, the protection structure can be sleeved on at least part of the outer surface of the wire harness. Therefore, the protective cover and the protection structure can protect the connection between the wire harness and the plug, which can effectively reduce the probability of water ingress at the connection between the wire harness and the plug.

In some embodiments, the protective cover and the protection structure are integrally formed.

By adopting the above technical solution, since the protective cover and the protection structure are integrally formed, while the protective cover is sleeved on the plug for protection, the protection structure can be sleeved on the wire harness, and thus the connection between the wire harness and the plug is jointly protected by the protective cover and the protection structure, effectively improving the waterproof effect at the plug.

In some embodiments, the protection structure is capable of being in sliding fit with the outer surface of the wire harness.

By adopting the above technical solution, the protection structure is configured to be in sliding fit with the outer surface of the wire harness, and thus the protective cover and the protection structure can synchronously slide relative to the wire harness, so as to facilitate the protective cover to move to be sleeved on the plug and cover the socket port after the plug is plugged into the socket port, which can effectively reduce the interference from the protective cover during the plugging operation of the plug.

In some embodiments, the protection structure closely fits against the outer surface of the wire harness.

By adopting the above technical solution, the protection structure is configured to closely fit against the outer surface of the wire harness, which can effectively reduce the probability of water droplets flowing from the outer surface of the wire harness to the plug, thereby reducing the probability of water ingress in the plug, and further improving the reliability of the connection between the plug and the socket.

In some embodiments, the protection structure exhibits elasticity.

By adopting the above technical solution, the protection structure is configured to exhibit elasticity, the protection structure can, according to its own elasticity, cover and clamp onto the outer surface of the wire harness, so as to improve the fitting degree between the protection structure and the wire harness, which can effectively reduce the probability of water ingress between the protection structure and the outer surface of the wire harness, and improve the reliability of the plug.

In some embodiments, the protection structure includes a sleeve, and the sleeve is connected to the protective cover and communicates with the accommodating cavity.

By adopting the above technical solution, the sleeve is used to protect the wire harness, the sleeve can be sleeved on the wire harness, which can effectively reduce the probability of water ingress from the wire harness to the plug.

In some embodiments, a relief slot for accommodating at least part of the plug is provided on the inner wall of the opening portion, and the relief slot communicates with the outside of the opening portion.

By adopting the above technical solution, by providing the relief slot on the inner wall of the opening portion, when the protective cover is sleeved on the plug, the plug enters the accommodating cavity from the opening portion, and at this time, a protruding part on the plug can smoothly enter the accommodating cavity from the relief slot, effectively improving the assembly convenience of the protective cover.

According to a second aspect, an embodiment of the present application further provides a battery, including a battery cell, a box body, a socket, and the connector as described above, where the battery cell is disposed in the box body, where the plug of the connector is configured to be plugged into the socket port of the socket.

Beneficial effects of the embodiments of the present application: The battery provided by the embodiments of the present application includes the above connector. On the basis that the protective cover of the above connector can cover the socket port and protect the socket port, when the connector is connected to the socket, the probability of water ingress occurring at the socket port of the socket is low, and therefore, the reliability of the battery in use is higher.

According to a third aspect, an embodiment of the present application further provides an electric device, including a socket, and further including the connector as described above or the battery as described above, where the battery is configured to provide electrical energy.

Beneficial effects of the embodiments of the present application: The electric device provided by the embodiments of the present application includes the above connector or the above battery, and when the probability of water ingress of the above connector is low, the battery has higher reliability, and the reliability of the electric device is also higher.

According to a fourth aspect, an embodiment of the present application further provides an energy storage device, including a socket, and further including the connector as described above or the battery as described above, where the battery is configured to store electrical energy.

Beneficial effects of the embodiments of the present application: The energy storage device provided by the embodiments of the present application includes the above connector or the above battery, on the basis that the probability of water ingress of the above connector is low and the battery has higher reliability, the reliability of the energy storage device is also higher.

### BRIEF DESCRIPTION OF DRAWINGS

To describe the technical solutions of the embodiments of the present application more clearly, the following briefly describes the accompanying drawings required for describing the embodiments or the related art. Apparently, the accompanying drawings described below show merely some embodiments of the present application, and persons of ordinary skill in the art may still derive other drawings from these accompanying drawings without creative efforts.
FIG. 1 is a schematic structural diagram of a vehicle according to an embodiment of the present application;
FIG. 2 is an exploded view of a battery according to an embodiment of the present application;
FIG. 3 is a schematic diagram of a connector according to an embodiment of the present application plugged into a socket;
FIG. 4 is a schematic diagram of different processes when a connector according to an embodiment of the present application is plugged into the socket;
FIG. 5 is a cross-sectional view when a connector according to an embodiment of the present application is plugged into the socket;
FIG. 6 is a schematic structural diagram of a protective cover according to an embodiment of the present application; and
FIG. 7 is a cross-sectional view of the protective cover according to an embodiment of the present application.

### Reference signs in the drawings:

1000. vehicle;
100. battery; 200. controller; 300. motor;
10. box body; 11. first portion; 12. second portion; 20. battery cell; 30. socket; 31. socket port;
400. connector;
410. plug; 420. protective cover; 421. accommodating cavity; 4211. relief slot; 422. opening portion; 430. wire harness; and 440. protection structure.

### DETAILED DESCRIPTION OF EMBODIMENTS

The embodiments of the present application are described in detail below. Examples of the embodiments are shown in the accompanying drawings, and reference signs that are the same or similar always indicate the same or similar elements or elements with the same or similar functions. The embodiments described below with reference to the accompanying drawings are illustrative and merely for explaining the present application. They should not be construed as limitations on the present application.

In the description of the present application, it should be understood that the orientations or positional relationships indicated by the terms "length", "width", "upper", "lower", "front", "rear", "left", "right", "perpendicular", "horizontal", "top", "bottom", "inner", "outer", and the like are based on the orientations or positional relationships shown in the accompanying drawings. These terms are merely for ease and brevity of description of the present application rather than indicating or implying that the apparatuses or elements mentioned must have specific orientations or must be constructed or manipulated according to specific orientations, and therefore shall not be construed as any limitations on the present application.

In addition, the terms "first" and "second" are merely for the purpose of description, and shall not be understood as any indication or implication of relative importance or any implicit indication of the number of technical features indicated. Therefore, a feature limited by "first" or "second" can explicitly or implicitly include one or more such features. In the description of the present application, "multiple" means two or at least two unless otherwise specifically stated.

In the present application, unless otherwise specified and defined explicitly, the terms "mount", "connect", "join", and "fasten" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skills in the art can understand specific meanings of these terms in the present application as appropriate to specific situations.

Connectors not only need to achieve basic protection against electric shock, but also should meet requirements for dustproof, moisture-proof, and waterproof for the electrical connections and communication connections of key products; especially for electrical connections in high-voltage systems, the waterproof requirements of connectors are particularly important.

In the related art, connectors commonly use a two-piece protective structure, in which two parts of the two-piece protective structure jointly enclose a tail portion of a wire harness portion of the connector for protection. However, such a two-piece protective structure has a complex structure, long development cycle, high assembly precision requirements, and high production cost, and the two-piece protective structure can only protect the connection portion between the plug of the connector and the wire harness. The plugging portion when the plug of the connector is plugged into the socket, that is, the socket port of the socket, cannot be protected by the two-piece protective structure. When the plug is plugged into the socket port of the socket for use, external water droplets easily find ingress through the socket port of the socket, thereby causing insulation failure or short circuit fault, affecting the reliability of the connector.

Based on the above considerations, in order to solve the problem in the related art that the protective structure only protects the connection portion of the wire harness, while the plugging portion between the plug of the connector and the socket still has a risk of water ingress, a connector is designed, by sleeving a protective cover on the plug, when the plug is plugged into the socket port, the protective cover can also cover the socket port of the socket, thereby achieving protection of the socket port, effectively reducing the probability of water ingress in the socket port, and further improving the reliability of the connection between the connector and the socket port.

The connector disclosed in the embodiments of the present application can be used for plugging connection to a socket provided on a battery, or the connector disclosed in the embodiments of the present application can also be used for plugging connection to other devices having a socket structure, for example, an electric device or an energy storage device. The electric device may be, but is not limited to, a mobile phone, a tablet, a laptop computer, a measuring instrument, a detection instrument, a control device, an electric toy, an electric tool, an electric scooter, an electric vehicle, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like. The energy storage device may be, but is not limited to, used in fixed or mobile energy stations, for example, an energy storage container, an energy storage distribution cabinet, an energy storage power station, or a swapping station. In some embodiments, the energy storage device may also include other functional compartments, for example, a control compartment, a fire-fighting compartment, and the like. The control compartment is configured to manage the battery to achieve storage and output of electrical energy.

For ease of description, the connector of an embodiment of the present application configured to be plugged into a socket provided on a battery is used for description of the following embodiments.

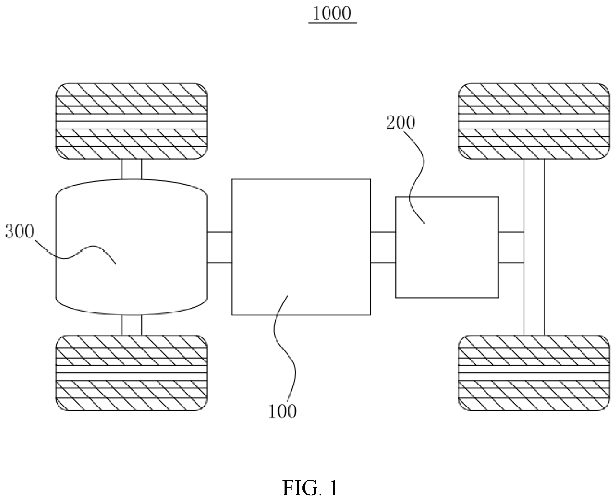

Referring to FIG. 1, FIG. 1 is a schematic structural diagram of a vehicle 1000 according to some embodiments of the present application. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. The vehicle 1000 is provided with a battery 100, where the battery 100 may be disposed at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy a working electricity need during start, navigation, and driving of the vehicle 1000.

In some embodiments of the present application, the battery 100 can be used as not only the operational power source for the vehicle 1000 but also a driving power source for the vehicle 1000, replacing or partially replacing fossil fuel or natural gas to provide driving traction for the vehicle 1000.

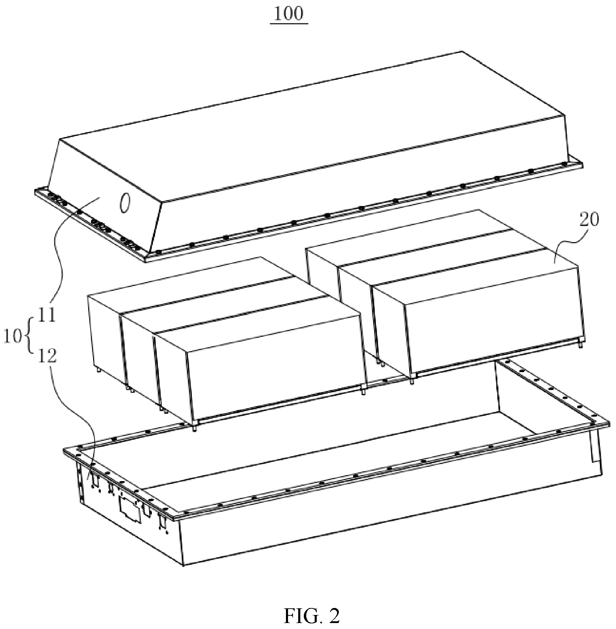

Referring to FIG. 2, FIG. 2 is an exploded view of the battery 100 according to some embodiments of the present application. The battery 100 includes a box body 10 and a battery cell 20, the above socket 30 can be provided on the box body 10, and the battery cell 20 is accommodated in the box body 10. The box body 10 is configured to provide an accommodating space for the battery cell 20. The box body 10 may be a variety of structures. In some embodiments, the box body 10 may include a first portion 11 and a second portion 12. The first portion 11 and the second portion 12 fit together to jointly define an accommodating space for accommodating the battery cell 20. The second portion 12 may be a hollow structure with one end open, and the first portion 11 may be a plate structure. The first portion 11 covers an open side of the second portion 12, so that the first portion 11 and the second portion 12 jointly define an accommodating space. Alternatively, the first portion 11 and the second portion 12 may each be a hollow structure with one side open, and the open side of the first portion 11 covers the open side of the second portion 12. Certainly, the box body 10 formed by the first portion 11 and the second portion 12 may be of various shapes, for example, cylinder or cuboid.

The box body 10 is provided with a socket, the socket is electrically connected to the battery cell 20 inside the box body 10, and the socket is configured for a connector to be plugged into, so as to conduct the connector with the battery cell 20 inside the box body 10. It should be understood that the socket includes a panel and a plugging terminal provided on the panel, where the panel is disposed on a surface of the box body 10, and the plugging terminal is formed with a socket port for plugging the connector.

In the battery 100, the battery cell 20 may be provided in plurality, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box body 10. Certainly, the battery 100 may alternatively be formed in a manner that a plurality of battery cells 20 are connected in series, parallel, or series-parallel first to form a battery module and then a plurality of battery modules are connected in series, parallel, or series-parallel to form an entirety which is accommodated in the box body 10. The battery 100 may further include other structures. For example, the battery 100 may further include a busbar configured to implement electrical connection between the plurality of battery cells 20.

Each battery cell 20 may be a secondary battery or a primary battery, or may be a lithium-sulfur battery, a sodium-ion battery, or a magnesium-ion battery, without being limited thereto. The battery cell 20 may be cylindrical, flat, cuboid, or of other shapes.

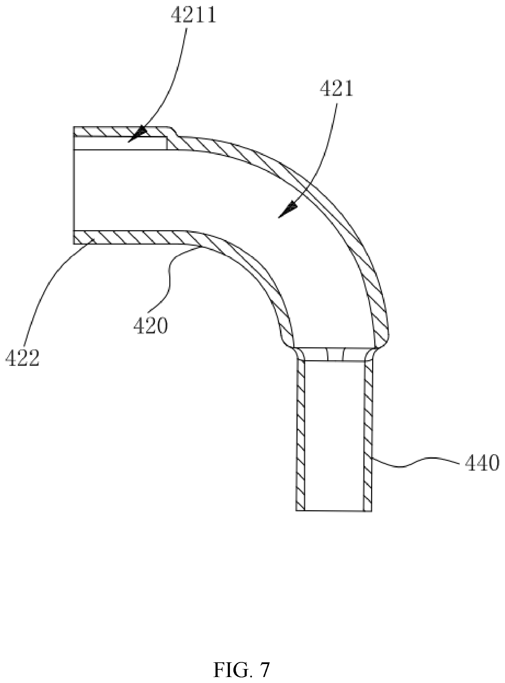

Referring to FIGs. 2 to 4 and FIG. 7, according to a first aspect, an embodiment of the present application provides a connector 400 for being plugged into a socket port 31 of a socket 30. The connector 400 includes a plug 410 and a protective cover 420, where the protective cover 420 has an accommodating cavity 421 and forms an opening portion 422 at a cavity opening of the accommodating cavity 421, the plug 410 is accommodated in the accommodating cavity 421; and when the plug 410 is plugged into the socket port 31, the opening portion 422 covers the socket 30 so that the socket port 31 is located in the accommodating cavity 421.

The plug 410 is a connection structure configured to be plugged into the socket port 31 of the socket 30 and achieving electrical connection with the socket 30.

The socket port 31 refers to a port of the socket 30, the plug 410 is plugged into the interior of the socket port 31, that is, the plug 410 can be plugged from the socket port 31 into the interior of the socket 30 to achieve electrical connection with the socket 30.

The protective cover 420 is configured to be sleeved on the plug 410 to achieve waterproofing of the plug 410. The accommodating cavity 421 of the protective cover 420 is configured to accommodate the plug 410 and the socket 30, so that the protective cover 420 can protect the plug 410 and the socket port 31 of the socket 30, mitigating the risk of water ingress. Optionally, the protective cover 420 can be, but is not limited to, a rectangular cover body, a spherical cover body, a block-shaped cover body, or other configurations of cover bodies. In some specific embodiments, the configuration of the protective cover 420 can be consistent with the configuration of the plug 410, so that the protective cover 420 can be tightly connected to the plug 410, reducing the probability of detachment of the protective cover 420.

It should be understood that the protective cover 420 may be, but is not limited to, a plastic cover body, a silicone cover body, a rubber cover body, or the like. In some specific embodiments, the protective cover 420 may be a plastic cover body, for example, a polyvinyl chloride cover body, where the polyvinyl chloride cover body can provide waterproof protection for the plug 410 and also provide insulation protection for the plug 410.

The protective cover 420 is sleeved on the plug 410, when the plug 410 is plugged into the socket port 31, the protective cover 420 can move toward the socket 30, so that the socket 30 can enter the accommodating cavity 421 from the opening portion 422 of the protective cover 420, that is, the opening portion 422 covers the socket 30, and the socket port 31 is located inside the accommodating cavity 421. Therefore the protective cover 420 can protect the socket port 31, effectively reducing water droplets splashing into the socket port 31.

It should be understood that it is only necessary to cover the socket port 31 inside the accommodating cavity 421 to achieve the purpose of reducing the probability of water droplets splashing into the socket port 31. Therefore, the opening portion 422 can cover any part of the socket 30, for example, covering only part of the socket 30, or completely covering the socket 30 inside is acceptable. Optionally, the opening portion 422 can cover the body of the socket 30, that is, the socket port 31 of the socket 30 and part of the socket 30 are located in the accommodating cavity 421. Alternatively, the opening portion 422 can cover an end of the socket 30 facing away from the socket port 31, so that the socket 30 is completely located in the accommodating cavity 421.

For the connector 400 provided by the embodiments of the present application, the protective cover 420 is sleeved on the plug 410, the protective cover 420 can cover the plug 410 to achieve dustproof and waterproofing purposes. In addition, when the plug 410 is plugged into the socket port 31, the opening portion 422 of the protective cover 420 can cover the socket 30 so that the socket port 31 is located in the accommodating cavity 421, that is, the protective cover 420 can also cover the socket port 31 of the socket 30, thereby achieving protection of the socket port 31, effectively reducing the probability of water ingress in the socket port 31, further mitigating the risk of insulation failure or short circuit between the plug 410 and the socket port 31, and effectively improving the reliability of the connection between the connector 400 and the socket port 31.

Optionally, the protective cover 420 may be made by an integral dip molding process, compared with the two-piece protective structure in the related art, the protective cover 420 only needs to be sleeved and assembled, which can effectively reduce the assembly process, and can also cover and protect the connection between the plug 410 and the socket 30, that is, the socket port 31.

It should be understood that the protective cover 420 has at least one opening portion 422, so that when the protective cover 420 is assembled, the protective cover 420 can be sleeved onto the plug 410 from the opening portion 422, and when the plug 410 is plugged into the socket port 31, the protective cover 420 can synchronously move with the plug 410 and sleeve the opening portion 422 onto the socket 30, thereby achieving the purpose of the protective cover 420 covering the socket port 31 of the socket 30.

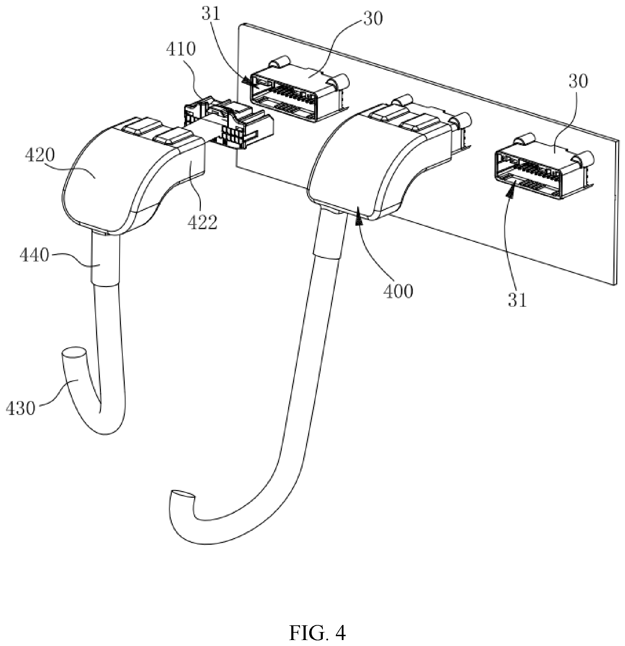

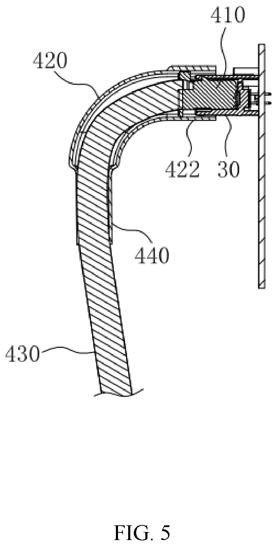

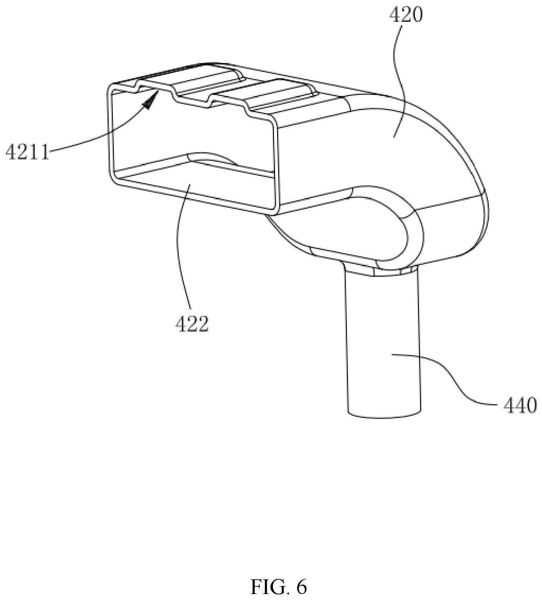

Referring to FIGs. 4 to 7, in some embodiments, the opening portion 422 is adapted to an outer surface of the socket 30, such that the inner wall of the opening portion 422 is capable of closely fitting against the outer surface of the socket 30.

It should be understood that when the plug 410 is plugged into the socket port 31 of the socket 30, the opening portion 422 of the protective cover 420 covers the outer surface of the socket 30, and at this time, at least part of the socket 30 extends into the interior of the accommodating cavity 421, so that the socket port 31 is also located in the interior of the accommodating cavity 421.

Since the opening portion 422 is adapted to the outer surface of the socket 30, when the opening portion 422 covers the outer surface of the socket 30, the inner wall of the opening portion 422 closely fits against the outer surface of the socket 30. Optionally, the protective cover 420 may be configured to exhibit elasticity, so that when the opening portion 422 covers the outer surface of the socket 30, the protective cover 420 constricts according to its own elasticity, so that the opening portion 422 can clamp tightly onto the outer surface of the socket 30. Alternatively, the size of the opening portion 422 may be set to be approximately the same as the size of the socket 30, so that when the opening portion 422 covers the socket 30, the inner wall of the opening portion 422 closely fits against the outer surface of the socket 30.

With such arrangement, when the plug 410 is plugged into the socket port 31, the opening portion 422 of the protective cover 420 can cover the socket 30 so that the socket port 31 is located in the accommodating cavity 421 and forms protection, the opening portion 422 is adapted to the outer surface of the socket 30, and thus the inner wall of the opening portion 422 can closely fit against the outer surface of the socket 30, thereby effectively reducing the probability of water droplets flowing into the socket port 31 from the outer surface of the socket 30. In addition, the inner wall of the opening portion closely fitting against the outer surface of the socket 30 can also reduce a contact area between the outer surface of the socket 30 and air, so as to reduce the probability of condensation forming on the outer surface of the socket 30, and thus the probability of water ingress due to condensation can also be reduced.

Referring to FIGs. 4 to 7, in some embodiments, the protective cover 420 exhibits elasticity.

Optionally, the protective cover 420 may be, but is not limited to, a rubber cover body, a silicone cover body, a polyvinyl chloride cover body, or other elastic cover bodies. When the protective cover 420 exhibiting elasticity is covered on the socket 30 through the opening portion 422, the protective cover 420 constricts according to its own elasticity, and thus the opening portion 422 also clamps onto the outer surface of the socket 30, thereby improving the tightness of fit between the inner wall of the opening portion 422 and the outer surface of the socket 30, and further improving the anti-water ingress capability.

With such arrangement, the protective cover 420 exhibits elasticity, the protective cover 420 can constrict according to its own elasticity, and thus the opening portion 422 can clamp onto the outer surface of the socket 30, so as to absorb dimensional tolerances of the plug 410 and the socket 30, reducing the dimensional tolerance requirements of the socket 30, achieving closely fitting between the inner wall of the opening portion 422 and the outer surface of the socket 30, therefore effectively reducing the probability of water ingress between the opening portion 422 and the outer surface of the socket 30, and improving the connection reliability between the plug 410 and the socket 30.

Referring to FIGs. 4 to 7, in some embodiments, the connector 400 further includes a wire harness 430, the wire harness 430 connected to the plug 410; the protective cover 420 is provided with a protection structure 440, and the protection structure 440 is sleeved on at least part of an outer surface of the wire harness 430.

The protection structure 440 is configured to be sleeved on the wire harness 430 and can cover at least part of the outer surface of the wire harness 430.

Optionally, the protection structure 440 may be a protective sleeve provided on the protective cover 420, the protective sleeve communicates with the accommodating cavity 421, and thus the wire harness 430 can pass through the protective sleeve and be connected to the plug 410 inside the accommodating cavity 421 of the protective cover 420, the protective sleeve can be sleeved on part of the outer surface of the wire harness 430, and the protective sleeve and the protective cover 420 can jointly protect the connection between the wire harness 430 and the plug 410. Alternatively, the protection structure 440 may be a wire outlet sleeve provided on the protective cover 420, thus the wire harness 430 can pass through the wire outlet sleeve and be connected to the plug 410 inside the accommodating cavity 421, and an inner wall of the wire outlet sleeve can cover part of the outer surface of the wire harness 430, and thus the connection between the wire harness 430 and the plug 410 is located inside the accommodating cavity 421.

With such arrangement, the wire harness 430 can pass through the protection structure 440 and be connected to the plug 410 in the accommodating cavity 421 of the protective cover 420, and thus the connection between the wire harness 430 and the plug 410 is located inside the accommodating cavity 421. Therefore, the protective cover 420 and the protection structure 440 can protect the connection between the wire harness 430 and the plug 410, effectively reducing the probability of water droplets ingressing into the plug 410 from the wire harness 430, and further reducing the probability of water ingress at the connection between the wire harness 430 and the plug 410.

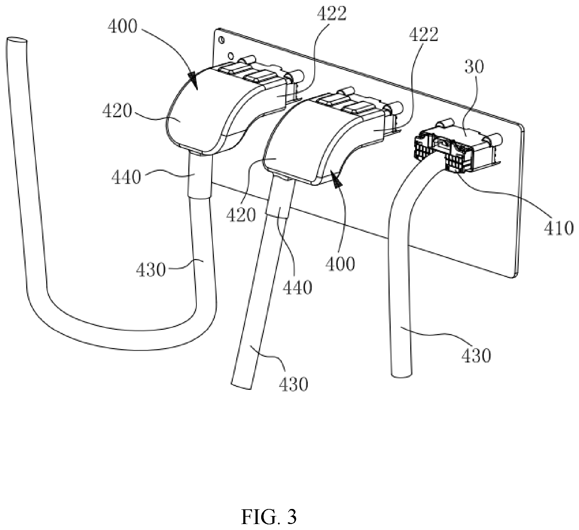

It should be understood that the protection structure 440 can also guide the routing of the wire harness 430, thereby mitigating dispersion and disorderly routing of the wire harness 430. By providing the protection structure 440 at different positions on the protective cover 420, the wire harness 430 can be guided in different directions to meet the layout requirements of the wire harness 430. In addition, providing the protection structure 440 at the same position on the protective cover 420 but at different angles can also adjust the routing direction of the wire harness 430. For example, when the protection structure 440 is a protective sleeve, different axial directions of the protective sleeve change the guiding direction of the routing of the wire harness 430 of the protective sleeve accordingly. As shown in FIG. 3, FIG. 3 shows two complete connectors 400 and one connector 400 without the protective cover 420 sleeved, the axial directions of the protective sleeves provided on the protective covers 420 of the two complete connectors 400 are different, and thus the wire harnesses 430 of the two have different routing directions.

Referring to FIGs. 4 to 7, in some embodiments, the protective cover 420 and the protection structure 440 are integrally formed.

It should be understood that the protective cover 420 can be integrally formed with the protection structure 440, thereby reducing connection processes between the protective cover 420 and the protection structure 440.

During assembly, the wire harness 430 can be sequentially passed through the protection structure 440 and the accommodating cavity 421 of the protective cover 420, and then the wire harness 430 and the plug 410 can be connected to achieve assembly of the protection structure 440 and the protective cover 420 to the plug 410 and the wire harness 430.

With such arrangement, since the protective cover 420 and the protection structure 440 are integrally formed, while the protective cover 420 is sleeved on the plug 410 for protection, the protection structure 440 can be sleeved on the wire harness 430, and thus the connection between the wire harness 430 and the plug 410 is jointly protected by the protective cover 420 and the protection structure 440, effectively improving the waterproof effect at the plug 410.

Referring to FIGs. 4 to 7, in some embodiments, the protection structure 440 is capable of being in sliding fit with the outer surface of the wire harness 430.

It should be understood that the protection structure 440 can be in clearance fit with the wire harness 430, and thus the protection structure 440 is capable of sliding relative to the wire harness 430. Alternatively, a side of the protection structure 440 in contact with the wire harness 430 can be configured as a smooth surface, enabling relative sliding between the protection structure 440 and the wire harness 430. Alternatively, the protection structure 440 can be configured to exhibit elasticity, and thus the wire harness 430 is also capable of sliding relative to the protection structure 440.

With such arrangement, the protection structure 440 is configured to be in sliding fit with the outer surface of the wire harness 430, when the wire harness 430 is connected to the plug 410, the wire harness 430 can be passed through the protection structure 440 and extend into the accommodating cavity 421, then the wire harness 430 extends out of the accommodating cavity 421 from the opening portion 422, so as to provide more space for the connection operation between the wire harness 430 and the plug 410. When the plug 410 is plugged into the socket port 31 of the socket 30, since the protective cover 420 is located outside the plug 410 at this time, the plug 410 has more operating space, and the operation of plugging the plug 410 into the socket port 31 is more convenient. After the plug 410 is plugged into the socket port 31, the protection structure 440 and the protective cover 420 can be moved, so that the protection structure 440 slides relative to the wire harness 430 until the protective cover 420 moves to the position where the opening portion 422 covers the outer surface of the socket 30; at this time, the socket port 31 of the socket 30 is located inside the accommodating cavity 421, and the connection between the plug 410 and the wire harness 430 is also located inside the accommodating cavity 421, that is, the protective cover 420 can simultaneously protect the socket port 31 and the connection between the plug 410 and the wire harness 430, effectively improving the dustproof and waterproof effect of the plug 410 and the socket port 31, and further improving the reliability of the connector 400.

Referring to FIGs. 4 to 7, in some embodiments, the protection structure 440 closely fits against the outer surface of the wire harness 430.

It should be understood that when the wire harness 430 passes through the protection structure 440 and is connected to the plug 410, the protection structure 440 can closely fit against the outer surface of the wire harness 430. For example, taking the protection structure 440 as a protective sleeve as an example, the wire harness 430 can pass through the inner cavity of the protective sleeve, and at this time, the inner wall of the inner cavity can closely fit against the outer surface of the wire harness 430. Alternatively, taking the protection structure 440 as a wire routing slot provided on the protective cover 420 as an example, when the wire harness 430 passes through the wire routing slot, the inner wall of the wire routing slot can closely fit against the wire harness 430.

The protection structure 440 is configured to closely fit against the outer surface of the wire harness 430. Optionally, the protection structure 440 can be configured to exhibit elasticity, so that when the wire harness 430 passes through the protection structure 440, the protection structure 440, according to its own elasticity, constricts and closely fits against the outer surface of the wire harness 430. Alternatively, the size of the protection structure 440 can be set to be approximately the same as a diameter of the wire harness 430, for example, when the protection structure 440 is a protective sleeve, an inner diameter of the protective sleeve is approximately the same as the diameter of the wire harness 430, or when the protection structure 440 is a wire routing slot, an inner diameter of the wire routing slot is approximately the same as the diameter of the wire harness 430, and thus when the wire harness 430 passes through the protection structure 440, the closely fitting between the protection structure 440 and the wire harness 430 is also achieved.

With such arrangement, the protection structure 440 is configured to closely fit against the outer surface of the wire harness 430, which can effectively reduce the probability of water droplets flowing from the outer surface of the wire harness 430 to the plug 410, thereby reducing the probability of water ingress in the plug 410, and further improving the reliability of the connection between the plug 410 and the socket 30.

Referring to FIGs. 4 to 7, in some embodiments, the protection structure 440 exhibits elasticity.

Optionally, the protection structure 440 can be, but is not limited to, a rubber structure, a silicone structure, a polyvinyl chloride structure, or other elastic structures. When the wire harness 430 passes through the protection structure 440 exhibiting elasticity, the protection structure 440, according to its own elasticity, clamps onto the outer surface of the wire harness 430, thereby improving the tightness of fit between the protection structure 440 and the outer surface of the wire harness 430, further improving the anti-water ingress capability.

It should be understood that when the protection structure 440 is a wire routing slot provided on the protective cover 420, the protection structure 440 exhibiting elasticity means that the protective cover 420 exhibits elasticity. When the protection structure 440 is a protective sleeve provided on the protective cover 420, the material of the protective sleeve can be consistent with the material of the protective cover 420, and the protective sleeve can also be integrally formed with the protective cover 420. For example, the protective cover 420 and the protective sleeve can be integrally formed by dip molding.

With such arrangement, the protection structure 440 is configured to exhibit elasticity, the protection structure 440 can, according to its own elasticity, cover and clamp onto the outer surface of the wire harness 430, so as to absorb dimensional tolerances of the plug 410 and the wire harness 430, reducing the dimensional tolerance requirements of the wire harness 430, thereby improving the fitting degree between the protection structure 440 and the wire harness 430, effectively reducing the probability of water ingress between the protection structure 440 and the outer surface of the wire harness 430, and improving the reliability of the plug 410.

Referring to FIGs. 4 to 7, in some embodiments, the protection structure 440 includes a sleeve, and the sleeve is connected to the protective cover 420 and communicates with the accommodating cavity 421.

It should be understood that the sleeve is in a tubular structure, and thus the wire harness can pass through the interior of the sleeve.

Optionally, the sleeve includes, but is not limited to, a plastic sleeve, a rubber sleeve, a silicone sleeve, a polyvinyl chloride sleeve, and the like. The sleeve can be a straight tubular structure, or the sleeve can also be an arc-shaped tubular structure. The sleeve can exhibit elasticity, and thus the sleeve can closely fit against the wire harness 430 according to its own elasticity.

With such arrangement, the sleeve is configured to protect the wire harness 430, the sleeve can be sleeved on the wire harness 430, and closely fit against the wire harness 430 by its own elasticity, effectively reducing the probability of water ingress from the wire harness 430 to the plug 410.

Referring to FIGs. 4 to 7, in some embodiments, a relief slot 4211 is provided on the inner wall of the opening portion 422, and the relief slot 4211 communicates with the outside of the opening portion 422.

It should be understood that an opening communicating with the accommodating cavity 421 is formed on the opening portion 422, the accommodating cavity 421 can communicate with the outside through the opening, and therefore, the plug 410 can enter the accommodating cavity 421 from the opening.

The relief slot 4211 communicates with the outside of the opening portion 422, and thus when the plug 410 moves into the accommodating cavity 421 from the opening portion 422 of the protective cover 420, the relief slot 4211 can avoid a protruding part of the plug 410, reducing interference influence between the plug 410 and the protective cover 420.

Optionally, the relief slot 4211 can be, but is not limited to, a rectangular slot, a circular slot, a spherical slot, and the like. One or more relief slots 4211 may be provided, and the specific number of relief slots 4211 can be consistent with the number of protruding parts of the plug 410.

With such arrangement, by providing the relief slot 4211 on the inner wall of the accommodating cavity 421, when the protective cover 420 is sleeved on the plug 410, the plug 410 enters the accommodating cavity 421 from the opening portion 422, at this time the protruding part on the plug 410 can smoothly enter the accommodating cavity 421 from the relief slot 4211, effectively improving the assembly convenience of the protective cover 420.

For example, in some specific embodiments, the connector 400 includes a wire harness 430, a plug 410, and a protective cover 420. The protective cover 420 forms an accommodating cavity 421 having an opening portion 422, a protective sleeve is integrally formed on the protective cover 420, and both the protective cover 420 and the protective sleeve exhibit elasticity. The plug 410 is accommodated in the accommodating cavity 421, the wire harness 430 can pass through the protective sleeve and extend into the accommodating cavity 421, and be connected to the plug 410, the protective sleeve is in interference fit with the wire harness 430, and the protective sleeve can, according to its own elasticity, closely fit against the outer surface of the wire harness 430. When the plug 410 is plugged into the socket port 31 of the socket 30, the protective sleeve and the protective cover 420 can be moved facing away from the plug 410, so that the protective sleeve slides relative to the wire harness 430, the plug 410 moves out from the opening portion 422 of the protective cover 420, and at this time, the plug 410 has more operating space. After the plug 410 is plugged into the socket port 31, the protective sleeve and the protective cover 420 can be moved toward the plug 410, so that the plug 410 enters the interior of the accommodating cavity 421 from the opening portion 422, and the opening portion 422 of the protective cover 420 covers the outer surface of the socket 30, and thus the socket port 31 is also located in the interior of the accommodating cavity 421. In addition, the protective cover 420 can, according to its own elasticity, closely fit against the outer surface of the socket 30. Thereby, the protective cover 420 can cover the socket port 31 for protection, reducing the probability of water droplets ingressing from the socket port 31, while the protective sleeve is sleeved on part of the wire harness 430, and the connection between the wire harness 430 and the plug 410 is also located in the accommodating cavity 421 of the protective cover 420. Therefore, the protective cover 420 can also protect the connection between the wire harness 430 and the plug 410, reducing the probability of water droplets ingressing from the plug 410, effectively improving the reliability of the connector 400.

Referring to FIGs. 2 to 4, according to a second aspect, an embodiment of the present application further provides a battery 100, including a battery cell, a box body, a socket 30, and the connector 400 as described above, where the battery cell 20 is disposed in the box body 10, the plug 410 of the connector 400 is configured to be plugged into the socket port 31 of the socket 30.

Optionally, the socket 30 may be provided on the box body 10 of the battery 100. For example, the socket 30 may be provided on the first portion 11 or the second portion 12 of the box body 10, or may be provided on any side wall surface (may be any side wall surface of the first portion 11 or any side wall surface of the second portion 12) of the box body 10, the socket 30 may be electrically connected to the battery cell 20, circuit board, or other structures inside the box body 10. Alternatively, the socket 30 may also be provided on a control circuit board of the battery 100. For example, the socket 30 may be provided on a battery management system (Battery Management System, BMS) circuit board, and connected to the socket 30 through the connector 400 to connect a sensor inside the battery 100 and the BMS circuit board.

The wire harness 430 of the connector 400 includes, but is not limited to, a voltage sampling wire harness, a temperature sampling wire harness, a BMS communication wire harness, or the like.

The battery 100 provided by the embodiments of the present application includes the above connector 400. On the basis that the protective cover 420 of the above connector 400 can cover the socket port 31 and protect the socket port 31, when the connector 400 is connected to the socket 30 on the box body 10, the probability of water ingress occurring at the socket port 31 of the socket 30 is low, and therefore, the reliability of the battery 100 in use is higher.

Referring to FIGs. 1 and 2, according to a third aspect, an embodiment of the present application further provides an electric device, including a socket 30, and further including the connector 400 as described above or the battery 100 as described above, where the battery 100 is configured to provide electrical energy.

The socket 30 may be provided on an outer shell structure of the electric device, or the socket 30 may also be provided on the box body 10 of the battery 100 for supplying power to the electric device.

The electric device provided by the embodiments of the present application includes the above connector 400 or the above battery 100, and when the probability of water ingress of the above connector 400 is low, the battery 100 has higher reliability, and the reliability of the electric device is also higher.

According to a fourth aspect, an embodiment of the present application further provides an energy storage device, including a socket 30, and further including the connector 400 as described above or the battery 100 as described above, where the battery 100 is configured to store electrical energy.

The socket 30 may be provided on an outer shell structure of the energy storage device, or the socket 30 may also be provided on the box body 10 of the battery 100 inside the energy storage device.

The energy storage device provided by the embodiments of the present application includes the above connector 400 or the above battery 100, and when the probability of water ingress of the above connector 400 is low and the battery 100 has higher reliability, the reliability of the energy storage device is also higher.

The foregoing descriptions are merely preferred embodiments of the present application, but are not intended to limit the present application. Any modification, equivalent replacement, or improvement made without departing from the spirit and principle of the present application shall fall within the protection scope of the present application.

## Claims

1. A connector configured to be plugged into a socket port of a socket, **characterized in that** the connector comprises
a plug; and
a protective cover having an accommodating cavity and forming an opening portion at a cavity opening of the accommodating cavity, the plug being accommodated in the accommodating cavity; and when the plug is plugged into the socket port, the opening portion covers the socket, so that the socket port is located in the accommodating cavity.

2. The connector according to claim 1, **characterized in that** the opening portion is adapted to an outer surface of the socket, such that an inner wall of the opening portion is capable of closely fitting against the outer surface of the socket.

3. The connector according to claim 1 or 2, **characterized in that** the protective cover exhibits elasticity.

4. The connector according to any one of claims 1 to 3, **characterized in that** the connector further comprises a wire harness, the wire harness connected to the plug; the protective cover is provided with a protection structure, and the protection structure is sleeved on at least part of an outer surface of the wire harness.

5. The connector according to claim 4, **characterized in that** the protective cover and the protection structure are integrally formed.

6. The connector according to claim 4 or 5, **characterized in that** the protection structure is capable of being in sliding fit with the outer surface of the wire harness.

7. The connector according to claim 4 or 5, **characterized in that** the protection structure closely fits against the outer surface of the wire harness.

8. The connector according to any one of claims 4 to 7, **characterized in that** the protection structure exhibits elasticity.

9. The connector according to any one of claims 4 to 8, **characterized in that** the protection structure comprises a sleeve, and the sleeve is connected to the protective cover and communicates with the accommodating cavity.

10. The connector according to any one of claims 1 to 9, **characterized in that** a relief slot for accommodating at least part of the plug is provided on an inner wall of the opening portion, and the relief slot communicates with the outside of the opening portion.

11. A battery, **characterized by** comprising a battery cell, a box body, a socket, and the connector according to any one of claims 1 to 10, wherein the battery cell is disposed in the box body, and a plug of the connector is configured to be plugged into the socket port of the socket.

12. An electric device, **characterized by** comprising a socket, and further comprising the connector according to any one of claims 1 to 10 or the battery according to claim 11, wherein the battery is configured to provide electrical energy.

13. An energy storage device, **characterized by** comprising a socket, and further comprising the connector according to any one of claims 1 to 10 or the battery according to claim 11, wherein the battery is configured to store electrical energy.
